**Europäisches Patentamt**

**European Patent Office**

**Office européen des brevets**

(11) Veröffentlichungsnummer : **0 340 539 B1**

(12) # EUROPÄISCHE PATENTSCHRIFT

(45) Veröffentlichungstag der Patentschrift :
12.06.91 Patentblatt 91/24

(51) Int. Cl.⁵ : **A01B 49/06, A01C 7/08**

(21) Anmeldenummer : 89107056.7

(22) Anmeldetag : 19.04.89

(54) **Landwirtschaftliche Bestellkombination und Verfahren zu ihrem Ausheben.**

(30) Priorität : 27.04.88 DE 3814149

(43) Veröffentlichungstag der Anmeldung :
08.11.89 Patentblatt 89/45

(45) Bekanntmachung des Hinweises auf die
Patenterteilung :
12.06.91 Patentblatt 91/24

(84) Benannte Vertragsstaaten :
AT CH DE FR GB IT LI NL SE

(56) Entgegenhaltungen :
EP-A- 0 310 856
DE-A- 3 543 691
US-A- 4 241 674
US-A- 4 509 438

(73) Patentinhaber : Amazonen-Werke H. Dreyer
GmbH & Co. KG
Am Amazonenwerk 9-13
W-4507 Hasbergen-Gaste (DE)

(72) Erfinder : Gattermann, Bernd, Dr.
Eichenwall 3
W-2872 Hude 1 (DE)
Erfinder : Steenken, Bernd
Waldhöfe 17
W-4475 Sögel 2 (DE)

(74) Vertreter : Patentanwälte Grünecker,
Kinkeldey, Stockmair & Partner
Maximilianstrasse 58
W-8000 München 22 (DE)

## Beschreibung

Die Erfindung betrifft ein Verfahren zum Ausheben einer landwirtschaftlichen Bestellkombination sowie eine landwirtschaftliche Bestellkombination, an der das Verfahren ausgeübt wird nach dem Oberbegriff des Anspruchs 1 bzw. 2.

Landwirtschaftliche Bestellkombinationen der gattungsgemäßen Art sind im Stand der Technik bekannt, z.B. aus der DE-OS 35 43 691.

Bei dieser bekannten Bestellkombination ist die Drillmaschine auf der Packerwalze abgestützt. Über ein oberes Kupplungselement, das als Hydraulikzylinder ausgebildet ist, ist die Drillmaschine am Anbaubock angelenkt, der auf der Bodenbearbeitungsmaschine zum Anschluß des oberlenkers des Dreipunktkrafthebers eines Schleppers angeordnet ist. Die Drillmaschine stützt sich mit ihrem Gewicht während des Betriebs auf dem Rahmen der Packerwalze ab. Die Packerwalze ihrerseits ist mittels Tragarmen mit der Bodenbearbeitungsmaschine derart verbunden, daß die Bodenbearbeitungsmaschine um einen gewissen Hub aushebbar ist, ohne die Packerwalze mit der Drillmaschine zunächst anzuheben. Wenn jedoch beim Anheben der begrenzte Hub zwischen Bodenbearbeitungsmaschine und Packerwalzen/Drillmaschinenkombination ausgeschöpft ist, wird das Gewicht von Packerwalze und Drillmaschine beim weiteren Ausheben über die Tragarme, die die Packerwalze mit der Bodenbearbeitungsmaschine verbinden, auf den Rahmen der Bodenbearbeitungsmaschine, genauer auf den Deckel des Getriebegehäusekastens, in dem die Antriebselemente beispielsweise für Zinkenkreisel einer als Kreiselegge ausgebildeten Bodenbearbeitungsmaschine angeordnet sind, aufgenommen. Da dieses Gesamtgewicht der Bestellkombination somit dann allein über das Gehäuse der Bodenbearbeitungsmaschine aufgefangen ist, ist es erforderlich, daß der Rahmen sowohl der Nachlaufwalze, die das Gewicht der Drillmaschine trägt, als auch die Tragarme für die Nachlaufwalze und schließlich auch der Rahmen der Bodenbearbeitungsmaschine selbst sehr stabil und entsprechend ausgeführt sein müssen.

Ausgehend von diesem Stand der Technik liegt der Erfindung die Aufgabe zugrunde, ein Verfahren zum Ausheben einer Bestellkombination nach dem Oberbegriff des Anspruchs 1 sowie eine Bestellkombination selbst zur Durchführung der Verfahrens anzugeben, bei dem die gesamte Konstruktion der Kombination insgesamt baulich einfacher und mit weniger schweren Bauelementen verwirklicht werden kann.

Diese Aufgabe wird bei einem gattungsgemäßen Verfahren mit den kennzeichnenden Merkmalen des Anspruchs 1 gelöst. Bei einer Bestellkombination nach dem Oberbegriff des Anspruchs 2 wird die Aufgabe durch die kennzeichnenden Merkmale des Anspruchs 2 gelöst.

Dadurch, daß man das Ausheben successive vornimmt, also zuerst die Bodenbearbeitungsmaschine, dann die Packerwalze und dann die Drillmaschine, ergibt sich eine Entlastung des Rahmens der Bodenbearbeitungsmaschine und des Rahmens der Packerwalze. Beim Ausheben wird durch diese Maßnahme die Drillmaschine durch ein entsprechendes Verbindungselement unabhängig von der Packerwalze ausgehoben, d.h., die Verbindung zwischen Drillmaschine, die mit ihrem Vorratsbehälter während des normalen Betriebs auf der Packerwalze aufsitzt, und der Packerwalze wird aufgehoben. Die Drillmaschine hebt sich beim Anheben von der Packerwalze ab und entlastet diese somit. Die Packerwalze ihrerseits stützt sich zwar noch auf dem Rahmen der Bodenbearbeitungsmaschine ab. Da jedoch das Gewicht der Packerwalze allein wesentlich geringer als das Gewicht von Packerwalze und Drillmaschine zusammen ist, kann das Getriebegehäuse an der Bodenbearbeitungsmaschine, auf dem die Packerwalze mit ihren Tragarmen beim Anheben aufsitzt weniger stark ausgebildet werden. Ebenso können die Tragarme der Packerwalze weniger stark ausgebildet werden, da diese nur das Gewicht der Packerwalze selbst beim Ausheben tragen müssen.

Somit ergibt sich insgesamt eine Gewichtseinsparung durch die Möglichkeit, weniger starke Bauteile zu verwenden,ohne daß Stabilitätsnachteile sowohl im Betrieb als auch beim Wendevorgang am Feldende oder bei der Fahrt zwischen Acker und Hof in Kauf genommen werden müßten.

In einer vorteilhaften Ausgestaltung der Erfindung ist vorgesehen, daß als Verbindungselement zum Anheben der Drillmaschine ein biegsames oder kettenförmiges oder telekopierbares Hubelement zwischen dem Anbaubock der Bodenbearbeitungsmaschine und der Drillmaschine angeordnet ist, das so bemessen ist, daß es beim Anheben der Bodenbearbeitungsmaschine auf Spannung kommt und dadurch Hubkraft auf die Drillmaschine ausübt, bevor die Packerwalze zwangsweise angehoben wird.

In einer weiteren sehr vorteilhaften Ausgestaltung der Erfindung ist vorgesehen, daß zwischen dem Rahmen der Drillmaschine und der Bodenbearbeitungsmaschine zumindest zwei quer zur Fahrtrichtung zueinander beabstandete Stützarme verlaufen, die einseitig an einem Rahmenträger der Drillmaschine und mit der zur Bodenbearbeitungsmaschine weisenden Seite am Rahmen der Bodenbearbeitungsmaschine angelegt sind. Diese Stützarme, die neben den Tragarmen der Packerwalze zwischen dem Rahmen der Bodenbearbeitungsmaschine und dem Rahmenträger der Drillmaschine verlaufen können, stützen die Drillmaschine in der ausgehobenen Stellung und stabilisieren diese. Wenn zwischen den beiden zur Drillmaschine hin weisenden Enden der Stützarme eine Querstrebe verläuft, genügt es, das Hubelement mittig an dieser Querstrebe angreifen zu lassen. Es ist aber auch denkbar, zwei Hubelemente beispielsweise in der Form einer Kette oder in der Form von Spannschlössern von der Mitte des Anbaubocks der Bodenbearbeitungsmaschine zu den beiden Seiten nach außen hin bis zu den freien Enden der Stützarme verlaufen zu lassen.

Um zu ermöglichen, daß die Drillmaschine an Bodenbearbeitungsmaschinen auch verschiedener Hersteller ankoppelbar und damit universell einsetzbar wird, ist weiterhin in einer vorteilhaften Ausgestaltung der Erfindung vorgesehen, daß die Stützarme verstellbar an die Drillmaschine ankuppelbar sind.

Die Erfindung wird im folgenden anhand der in der Zeichnung dargestellten Ausführungsbeispiele weiter erläutert und beschrieben. Hierbei zeigen :

Figur 1 eine erfindungsgemäß ausgebildete Bestellkombination in der Seitenansicht, während des Einsatzes,

Figur 2 die gleiche Bestellkombination im ausgehobenen Zustand und

Figur 3 eine weitere Bestellkombination in Seitenansicht während des Einsatzes, die Figuren 1 und 2 jeweils in einer Prinzipdarstellung.

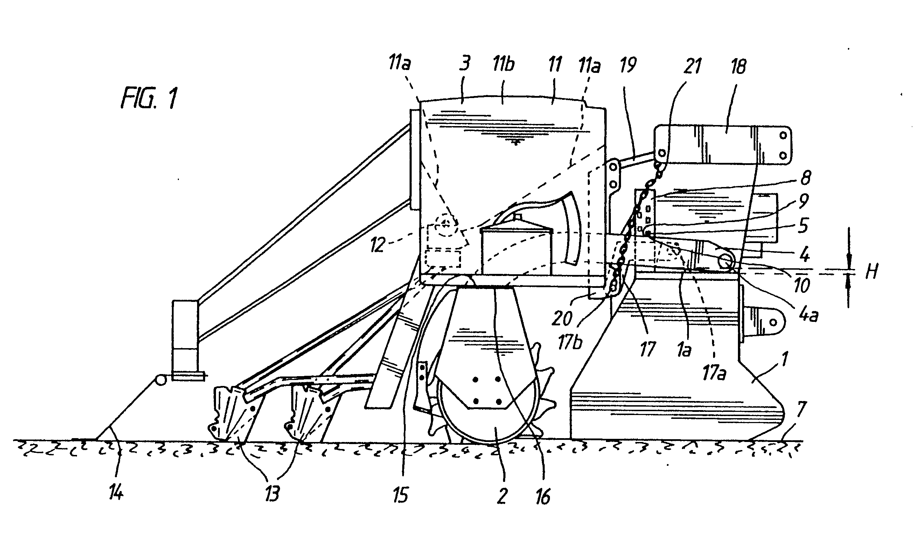

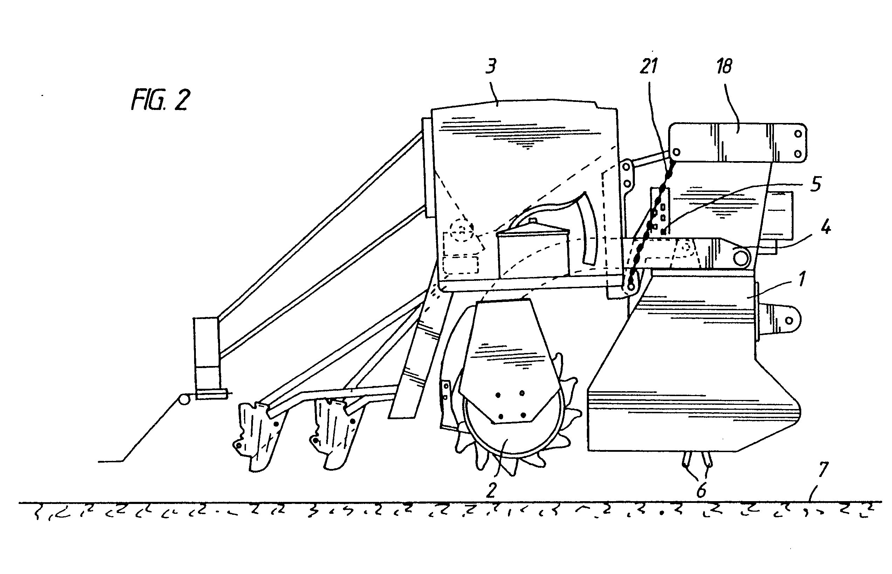

Die landwirtschaftliche Bestellkombination gemäß Figur 1 und 2 besteht aus der zapfwellengetriebenen Bodenbearbeitungsmaschine 1, die in dem dargestellten Ausführungsbeispiel eine Kreiselegge ist, sowie einer hinter der Bodenbearbeitungsmaschine 1 angeordneten Nachlaufwalze 2 und der auf die Nachlaufwalze 2 aufgesattelten Drillmaschine 3. Unter aufgesattelt versteht die vorliegende Beschreibung, daß das Gewicht der Drillmaschine über die Packerwalze bzw. die Bodenbearbeitungsmaschine aufgefangen wird, die Drillmaschine somit kein eigenes Fahrwerk hat. In den Figuren ist zu erkennen, daß die Schare 13 hinter der Packerwalze 2 in den Boden eingreifen und daß hinter den Scharen noch Striegelelemente 14 wirken.

Die Nachlaufwalze 2 ist über die Tragarme 4 an der Bodenbearbeitungsmaschine 1 angekoppelt. Hierzu dient das Gelenk 4a, das eine gelenkige Anlenkung des zur Bodenbearbeitungsmaschine 1 weisenden freien Ende der Tragarme 4 die symetrisch zur in Fahrtrichtung gesehenen Mittelachse der Bestellkombination liegen, an dem Getriebegehäuses der Bodenbearbeitungsmaschine ermöglicht. An dem Rahmen der Bodenbearbeitungsmaschine 1 sind des weiteren Einstellelemente 5 angeordnet, die in Fahrtrichtung gesehen hinter den Gelenken 4a der Tragarme 4 liegen. Über diese Einstellelemente 5, die als Anschlag für die Tragarme 4 wirken, läßt sich die Eingriffstiefe der Bodenbearbeitungswerkzeuge 6 der Bodenbearbeitungsmaschine in den Boden 7 einstellen. Die Einstellelemente 5 bestehen aus den Lochelementen 8 und dem in die Löcher 9 einsteckbaren Bolzen 10, gegen welchen die Tragarme 4 der Nachlaufwalze 2 zur Anlage kommen. durch das Einstecken des Bolzens 10 in die verschiedenen Löcher 9 des Lochelements kann, wie erwähnt, die Arbeitstiefe der Bodenbearbeitungswerkzeuge 6 eingestellt werden.

Die aufgesattelte Drillmaschine 3 weist einen Vorratsbehälter 11 auf, der über der Packerwalze liegt.

Vom Vorratsbehälter führen Saatgutleitungen zu den hinter der Packerwalze angeordneten Scharen 13. Hinter den Scharen wirken die Striegel 14. Der Vorratsbehälter 11 der Drillmaschine weist einen über die Breite der Bestellkombination verlaufenden, durch die gestrichelten Linien 11a angedeuteten spitz zulaufenden Boden auf, sowie zwei Seitenwände 11b, die tiefer gezogen sind als das untere Ende des Bodens 11a. Mit diesen Seitenwänden 11b sitzt der Vorratsbehälter und damit die Drillmaschine auf der Oberseite des Rahmens 16 der Packerwalze 2 im Betrieb auf. Es besteht aber keine formschlüssige Verbindung zwischen dem Rahmen 16 und den Seitenwänden 11b. Vielmehr ruht der Vorratsbehälter lediglich aufgrund des Gewichts der Drillmaschine auf diesem Rahmen 16. Da die Seitenwände 11b tiefer heruntergezogen sind als die Bodenwandung 11a, besteht Raum zwischen den Seitenwänden zur Hindurchführung der gebogen verlaufenden Tragarme 4 der Packerwalze. Dies ist in der Zeichnung gestrichelt angedeutet. Des weiteren verläuft zwischen den beiden Seitenwänden der Drillmaschine ein Rahmenträger 20, der von den Seitenwänden ansteigend bis zur Mitte verläuft, wobei an dieser Stelle ein Oberlenker 19 den Anbaubock 18 mit dem Rahmenträger 20 verbindet. Auf dem Getriebegehäuseoberteil 1a der Bodenbearbeitungsmaschine sind des weiteren zwei Anlenkstellen 17a angebracht, die symetrisch zur Fahrzeugmitte rechts und links vom Rahmenträger 18 angeordnet sind. In den Zeichnungen ist jeweils nur eine Anlenkstelle zu erkennen. An diesen Anlenkstellen 17a greifen Stützarme 17 an, die die Anlenkstellen 17a gelenkig mit dem Stützrahmen 20 verbinden. Zwischen den freien Enden der Stützarme 17 verläuft eine in den Zeichnungen nicht dargestellte Querstrebe etwa entlang der in der Zeichnung mit 17b bezeichneten Achse.

An dieser Querstrebe ist das Hubelement, im gezeichneten Ausführungsbeispiel in der Form einer Kette 21, an einem Ende angelenkt, während das andere Ende am Anbaubock 18 etwa in der Höhe, in der auch der Oberlenker des Dreipunktkrafthebers eines Schleppers angreift, angeschlossen ist.

Dieses Hubelement 21 ist so bemessen, daß es beim Ausheben (siehe Figur 2) unter Spannung kommt und damit den Vorratsbehälter 11 und damit auch die Drillmaschine von ihrem Sitz auf der Packerwalze abhebt, noch bevor der Tragarm 4 der Packerwalze auf der Oberfläche 1a des Getriebegehäuses voll aufsitzt, wie das in Figur 2 gezeigt ist. Damit findet eine Entkopplung der Krafteinleitung auf die Packerwalze statt, so daß das Gewicht der Drillmaschine allein über das Hubelement 21 in den Anbaubock 18 eingeleitet wird.

Andererseits ist das Hubelement in der Arbeitsstellung gemäß Figur 1 lose. Wie die Figur auch zeigt kann aufgrund der Anordnung des Einstellelements 5 eine gewisse Bewegung der Bodenbearbeitungsmaschine nach oben stattfinden, ohne daß sich die auf der Packerwalze aufsitzende Drillmaschine und die Packerwalze selbst nach oben bewegt. Dieser in Figur 1 mit H bezeichnete Hub ist in seiner Höhe so bemessen, daß er ausreicht um der Bodenbearbeitungsmaschine 1 ein Ausweichen durch Anheben über Steine zu ermöglichen. Die Bodenbearbeitungsmaschine ist somit im Betrieb um die Hubhöhe H frei gegenüber der Drillmaschine und der Packerwalze höhenbeweglich, was die Gefahr von Beschädigungen an den Werkzeugen der Bodenbearbeitungsmaschine erheblich vermindert.

Beim Aushebevorgang wird zunächst durch Anheben des Dreipunktkrafthebers des Schleppers, der an die nicht näher bezeichneten Anlenkpunkte rechts in Figur 1 angelenkt wird, die Bodenbearbeitungsmaschine 1 angehoben. Noch bevor die Packerwalze auf der Oberfläche 1a des Rahmens der Bodenbearbeitungsmaschine aufsitzt, kommt das Hubelement 21 unter Spannung und hebt somit die Drillmaschine gegenüber der Packerwalze an (siehe Figur 2). Beim weiteren Anheben kommt der Tragarm 4 der Packerwalze zur Auflage der Oberfläche 1a des Rahmens und wird dadurch an einem weiteren Abfallen gegenüber der Bodenbearbeitungsmaschine gehindert. Der obere Rahmen der Bodenbearbeitungsmaschine braucht daher lediglich das Gewicht der Packerwalze aufzunehmen, nicht jedoch auch das Gewicht der Drillmaschine. Beim Absetzen laufen die Vorgänge in umgekehrter Reihenfolge ab.

Die Tragarme 17 weisen mehrere nicht gezeigte Bohrungen je Längenveränderung auf, so daß Drillmaschinen und Bodenbearbeitungsmaschinen verschiedenen Typs miteinander gekuppelt werden können.

Es kann sowohl ein einziges Hubelement in Form einer Kette 21 oder auch in Form eines anderen teleskopartig wirkenden oder biegsamen Elementes vorgesehen sein, welches in der Mitte der Querstrebe bzw. mittig am Rahmen der Drillmaschine angreift, es ist aber auch möglich zwei solcher Hubelemente vorzusehen, die mit ihrem unteren Ende jeweils im Bereich der freien, zur Drillmaschine hin weisenden Enden der Stützarme 17 oder unmittelbar an anderen Rahmenteilen der Drillmaschine angreifen, während sie mit ihren oberen Enden zusammenlaufen und am Anbaubock 18, dessen oberes Ende in der Mittelachse der Bestellkombination liegt, zusammengefügt sind.

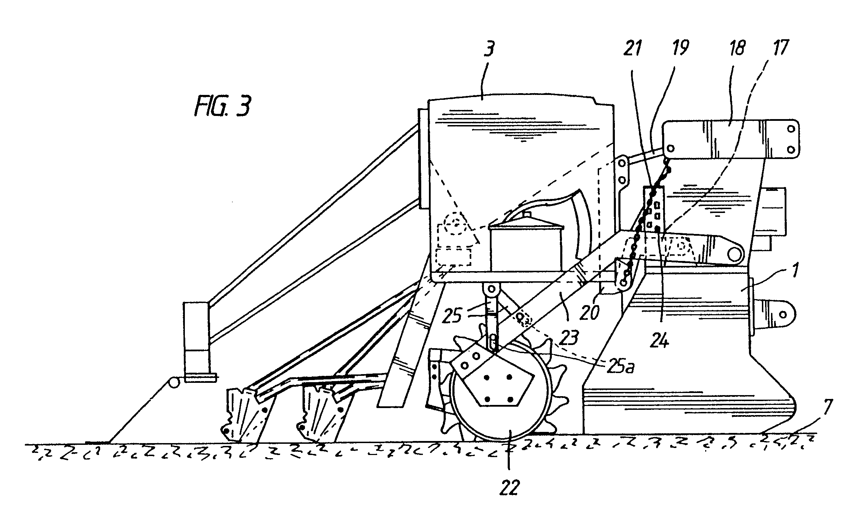

Bei dem Ausführungsbeispiel nach Figur 3 besteht die Bestellkombination ebenfalls aus einem zapfwellengetriebenen Bodenbearbeitungsgerät 1, einer hinter der Bodenbearbeitungsmaschine 1 angeordneten Nachlaufwalze 22 und einer auf der Nachlaufwalze 22 aufgesattelten Drillmaschine 3. Die Nachlaufwalze 22 ist über die Tragarme 23, die im Unterschied zu dem Ausführungsbeispiel der Figuren 1 und 2 seitlich außen neben der Nachlaufwalze 22 auf den beiden Seiten angeordnet sind, mit der Bodenbearbeitungsmaschine 1 gelenkig verbunden. Am Rahmen der Bodenbearbeitungsmaschine sind wiederum Einstellelemente 24 entsprechend den in Figur 1 beschriebenen Einstellelementen 5 vorhanden, die die Eingriffstiefe der Bodenbearbeitungswerkzeuge der Bodenbearbeitungsmaschine 1 in den Boden 7 einzustellen erlauben. Im Unterschied zu dem Ausführungsbeispiel nach der Figur 1 stützt sich die Drillmaschine mit unteren Abstützelementen 25 zu beiden Seiten auf den Tragarmen 23 der Packerwalze bzw. Nachlaufwalze ab. Zur Abstützung dienen Langlöcher, in die entsprechend an den Tragarmen 23 angeordnete Bolzen eingreifen. Diese Langlöcher 25a erlauben eine Höhenbeweglichkeit der Drillmaschine gegenüber der Packerwalze, so daß beim Ausheben wenn das Hubelement 21 entsprechend der Beschreibung der Figur 1 unter Zug kommt die Packerwalze vom Gewicht der Drillmaschine entlastet wird und damit das Gewicht der Drillmaschine nicht über die Tragarme 23 der Packerwalze im ausgehobenen Zustand auf den Rahmen der Bodenbearbeitungsmaschine eingeleitet wird. Bei dieser Ausführungsform wird die Drillmaschine durch die Abstützelemente 25 auch im ausgehobenen Zustand an den Tragarmen 23 gegen seitliche Verschiebungen geführt.

**Ansprüche**

1. Verfahren zum Ausheben einer landwirtschaftlichen Bestellkombination mit einer zapfwellengetriebenen Bodenbearbeitungsmaschine (1), einer hinter der Bodenbearbeitungsmaschine angeordneten und über Einstellelemente (24) die Arbeitstiefe der Bodenbearbeitungsmaschine (1) bestimmenden, über Tragarme (4, 23) schwenkbar am Rahmen der Bodenbearbeitungsmaschine angelenkte Nachlaufwalze (2, 22) und mit einer aufgesattelten Drillmaschine (3), deren Schare (13) hinter der Nachlaufwalze (2) und deren Vorratsbehälter über der Nachlaufwalze (2) liegt und in der Arbeitsstellung durch Abstützen auf der Nachlaufwalze (2) getragen wird, wobei die Bodenbearbeitungsmaschine (1) an dem Dreipunktkraftheber eines Schleppers ankuppelbar ist, und dabei der Oberlenker dieser Dreipunktkraftverbindung an einem Anbaubock (18) der Bodenbearbeitungsmaschine (1) angreift, **dadurch gekennzeichnet,** daß beim Ausheben der Bestellkombination zunächst die Bodenbearbeitungsmaschine al lein, dann die Drillmaschine unter Entlastung der Nachlaufwalze und schließlich die Nachlaufwalze selbst ausgehoben werden.

2. Landwirtschaftliche Bestellkombination mit einer zapfwellengetriebenen Bodenbearbeitungsmaschine (1), einer hinter der Bodenbearbeitungsmaschine angeordneten und über Einstellelemente (24) die Arbeitstiefe der Bodenbearbeitungsmaschine (1) bestimmenden, über Tragarme (4, 23) schwenkbar am Rahmen der Bodenbearbeitungsmaschine angelenkte Nachlaufwalze (2, 22) und mit einer aufgesattelten Drillmaschine, deren Schare (13) hinter der Nachlaufwalze (2) und deren Vorratsbehälter über der Nachlaufwalze (2) liegt und in der Arbeitsstellung durch Abstützen auf der Nachlaufwalze (2) getragen wird, wobei die Bodenbearbeitungsmaschine (1) an den Dreipunktkraftheber eines Schleppers ankuppelbar ist, dabei der Oberlenker dieser Dreipunktkraftverbindung an einem Anbaubock (18) der Bodenbearbeitungsmaschine (1) angreift und wobei die gesamte Bestellkombination über den Dreipunktkraftheber aushebbar ist und zwischen der Bodenbearbeitungsmaschine (1) der Nachlaufwalze (2) und der Drillmaschine (3) derart ausgebildete Verbindungselemente (4, 23 ; 19, 17, 21) angeordnet sind, daß in der abgesenkten Arbeitsstellung die Bodenbearbeitungsmaschine gegenüber der Nachlaufwalze und der Drillmaschine um einen begrenzten Hub (H) frei aushebbar ist, **dadurch gekennzeichnet**, daß als Verbindungselemente zum Ausheben der Drillmaschine (3) ein biegsames oder kettenförmiges oder teleskopierbares Hubelement (21)sich zwischen dem Anbaubock (18) der Bodenbearbeitungsmaschine und der Drillmaschine (3) befindet, welches so bemessen ist, daß es beim busheben der Bodenbearbeitungsmaschine (1) auf Spannung kommt und dadurch Hubkraft auf die Drillmaschine (3) ausübt, bevor die Nachlaufwalze (2) zwangsweise ausgehoben wird.

3. Bestellkombination nach Anspruch 2, **dadurch gekennzeichnet**, daß zwischen zwei Seitenwänden des Vorratsbehälters der Drillmaschine auf der zur Bodenbearbeitungsmaschine weisenden Seite ein Rahmenträger (20) angeordnet ist, und daß zwischen dem Rahmenträger (20) und der Bodenbearbeitungsmaschine zumindest zwei quer zur Fahrtrichtung beabstandete Stützarme (17) verlaufen, die einseitig am Rahmenträger (20) der Drillmaschine (3) und auf der zur Bodenbearbeitungsmaschine (1) weisenden Seite am Rahmen derselben angelenkt sind.

4. Bestellkombination nach Anspruch 3, **dadurch gekennzeichnet**, daß zwischen den zur Drillmaschine weisenden Enden der Stützarme (17) eine Querstrebe (Achse 17b) verläuft.

5. Bestellkombination nach Anspruch 4, **dadurch gekennzeichnet**, daß das Hubelement (21) in der Mitte zwischen den beiden Stützarmen (17) an der Querstrebe angreift.

6. Bestellkombination nach wenigstens einem der Ansprüche 3 bis 5, **dadurch gekennzeichnet**, daß die Tragarme (17) auf unterschiedliche Längen zwischen Drillmaschine (3) und Bodenbeareitungsmaschine (1) einstellbar sind.

7. Bestellkombination nach wenigstens einem der Ansprüche 2 bis 6, **dadurch gekennzeichnet**, daß der Rahmen der Drillmaschine (3) sich in abgesenkter Stellung der Bestellkombination auf der Oberseite des Rahmens (16) der Nachlaufwalze (2) abstützt.

8. Bestellkombination nach wenigstens einem der Ansprüche 2 bis 7, **dadurch gekennzeichnet**, daß zwischen dem Rahmen der Drillmaschine (3) und der Nachlaufwalze (22) Abstützelemente (25) beidseitig der Drillmaschine (3) angeordnet sind.

9. Bestellkombination nach Anspruch 8, **dadurch gekennzeichnet**, daß die Abstützelemente (25) sich auf den Tragarmen (23) der Nachlaufwalze (22) abstützen.

## Claims

1. Method of lifting an agricultural cultivation assembly, including a ground cultivating machine (1) which is driven by a power take-off shaft, a follower roller (2, 22) which is disposed behind the ground cultivating machine, determines the working depth of the ground cultivating machine (1) via the intermediary of adjusting members (24) and is pivotably mounted on the frame of the ground cultivating machine via the intermediary of supporting arms (4, 23), and including a pivotable drill (3) having its coulters (13) situated behind the follower roller (2) and its hopper situated above the follower roller (2) and supported in the working position by being supported on the follower roller (2), the ground cultivating machine (1) being connectable to the three-point hydraulic lift of a tractor, and wherein the upper guide member of this three-point hydraulic connection engages with an attachment block (18) of the ground cultivating machine (1), characterised in that, upon the cultivation assembly being lifted, the ground cultivating machine is initially lifted on its own, then the drill is lifted with the follower roller being relieved of pressure, and finally the follower roller itself is lifted.

2. An agricultural cultivation assembly, including a ground cultivating machine (1) which is driven by a power take-off shaft, a follower roller (2, 22) which is disposed behind the ground cultivating machine, determines the working depth of the ground cultivating machine (1) via the intermediary of adjusting members (24) and is pivotably mounted on the frame of the ground cultivating machine via the intermediary of supporting arms (4, 23), and including a pivotable drill having its coulters (13) situated behind the follower roller (2) and its hopper situated above the follower roller (2) and supported in the working position by being supported on the follower roller (2), the ground cultivating machine (1) being connectable to the three-point hydraulic lift of a tractor, whereby the upper guide member of this three-point hydraulic connection engages with an attachment block (18) of the ground cultivating machine (1), and the entire cultivation assembly being liftable via the intermediary of the three-point hydraulic lift, and connecting members (4, 23 ; 19, 17, 21) being disposed between the ground cultivating machine (1), the follower roller (2) and the drill (3) and being so constructed that, in the lowered working position, the ground cultivating machine is freely liftable relative to the follower roller and the drill by a limited lifting movement (H), characterised in that a flexible or chain-like or telescopic lifting means (21) is situated between the attachment block (18) of the ground cultivating machine and the drill (3) so as to serve as connecting means for lifting the drill (3) and is of such dimensions that, upon the ground cultivating machine (1) being lifted, said lifting means becomes tensioned and thereby exerts a lifting force upon the drill (3) before the follower roller (2) is forcibly lifted.

3. Cultivation assembly according to claim 2, characterised in that a frame support (20) is disposed between two lateral walls of the hopper of the drill on the side facing the ground cultivating machine, and in that at least two supporting arms (17), which are spaced apart transversely relative to the direction of travel, extend between the frame support (20) and the ground cultivating machine and are pivotally mounted with one end on the frame support (20) of the drill (3) and with the end facing the ground cultivating machine (1) on the frame of said machine.

4. Cultivation assembly according to claim 3, characterised in that a cross-piece member (axle 17b) extends between the ends of the supporting arms (17) facing the drill.

5. Cultivation assembly according to claim 4, characterised in that the lifting means (21) engages on the transverse strut centrally between the two supporting arms (17).

6. Cultivation assembly according to at least one of claims 3 to 5, characterised in that the supporting arms (17) are adjustable to various lengths between drill (3) and ground cultivating machine (1).

7. Cultivation assembly according to at least one of claims 2 to 6, characterised in that the frame of the drill (3) is supported on the upper surface of the frame (16) of the follower roller (2) when the cultivation assembly is in its lowered position.

8. Cultivation assembly according to at least one of claims 2 to 7, characterised in that supporting members (25) are disposed on both sides of the drill (3) between the frame of the drill (3) and the follower roller (22).

9. Cultivation assembly according to claim 8, characterised in that the supporting members (25) are supported on the supporting arms (23) of the follower roller (22).

**Revendications**

1. Procédé pour soulever une machine combinée à usage agricole comportant une machine pour le travail du sol (1), entraînée à partir de la prise de force, un rouleau suiveur (2, 22) en aval de la machine pour le travail du sol, articulée par des bras de support (4, 23) de manière pivotante sur le châssis de la machine et par des éléments de réglage (24) qui permettent de définir la profondeur de travail de la machine (1), ainsi qu'un semoir (3), porté, dont les socs (13) se trouvent en aval du rouleau suiveur (2) et dont le réservoir d'alimentation se trouve au-dessus du rouleau suiveur (2) et est porté en position de travail, par appui sur le rouleau suiveur (2), la machine pour le travail du sol (1) étant reliée à un attelage en trois points d'un tracteur et le bras supérieur de cet attelage en trois points étant relié à un bloc de montage (18) de la machine pour le travail du sol (1), caractérisé en ce que lors du soulèvement de la machine combinée, il y a tout d'abord soulèvement de la machine pour le travail du sol, prise seule, puis du semoir tout en déchargeant le rouleau suiveur et enfin soulèvement du rouleau suiveur lui-même.

2. Machine combinée pour le travail agricole, comportant une machine pour le travail du sol (1), entraînée à partir de la prise de force, un rouleau suiveur (2, 22) en aval de la machine pour le travail du sol, articulée par des bras de support (4, 23) de manière pivotante sur le châssis de la machine et par des éléments de réglage (24) qui permettent de définir la profondeur de travail de la machine (1), ainsi qu'un semoir (3), porté, dont les socs (13) se trouvent en aval du rouleau suiveur (2) et dont le réservoir d'alimentation se trouve au-dessus du rouleau suiveur (2) et est porté en position de travail, par appui sur le rouleau suiveur (2), la machine pour le travail du sol (1) étant reliée à un attelage en trois points d'un tracteur et le bras supérieur de cet attelage en trois points étant relié à un bloc de montage (18) de la machine pour le travail du sol (1) et l'ensemble de la machine combinée peut être soulevé par l'attelage en trois points et entre la machine pour le travail du sol (1), le rouleau suiveur (2) et le semoir (3), il y a des éléments de liaison (4, 23, 19, 17, 21) conçus de façon qu'en position de travail, abaissée, la machine pour le travail du sol peut se soulever librement par rapport au rouleau suiveur et au semoir d'une course limitée H, caractérisée en ce que les éléments de liaison pour soulever le semoir (3) sont constitués par un élément de levage (21) souple ou en forme de chaîne ou télescopique, cet élément étant prévu entre le bloc de montage (18) de la machine pour le travail du sol (1) et le semoir (3), cet élément étant dimensionné de façon que lors du soulèvement de la machine pour le travail du sol (1), il se mette en tension et que la force de relevage soulève nécessairement le semoir (3) avant de soulever le rouleau suiveur (2).

3. Machine combinée selon la revendication 2, caractérisée par un support de châssis (20) prévu entre deux parois latérales du réservoir d'alimentation du semoir, du côté tourné vers la machine pour le travail du sol, et en ce qu'entre le support de châssis (20) et la machine passent au moins deux bras d'appui (17) écartés transversalement à la direction de déplacement, et qui sont articulés d'un côté au support de châssis (20) du semoir (3) et de l'autre côté tourné vers la machine (1), au châssis de cette machine

4. Machine combinée selon la revendication 3, caractérisée en ce qu'une traverse (axe 17b) passe entre les extrémités des bras d'appui (17) dirigés vers le semoir.

5. Machine selon la revendication 4, caractérisée en ce que l'élément de relevage (21) agit sur une traverse au milieu entre les deux bras d'appui (17).

6. Machine selon au moins l'une des revendications 3 à 5, caractérisée en ce que les bras de support (17) se règlent à des longueurs différentes entre le semoir (3) et la machine pour le travail du sol (1).

7. Machine combinée selon au moins l'une des revendications 2 à 6, caractérisée en ce que le châssis du semoir (3) s'appuie en position abaissée de la machine combinée, sur la face supérieure du châssis (16) du rouleau suiveur (2).

8. Machine combinée selon au moins l'une des revendications 2 à 7, caractérisée par des éléments d'appui (25) prévus des deux côtés du semoir (3), entre le châssis du semoir (3) et le rouleau suiveur (22).

9. Machine combinée selon la revendication 8, caractérisée en ce que les éléments d'appui (25) s'appuient sur les bras de support (23) du rouleau suiveur (22).

FIG. 1

EP 0 340 539 B1

FIG. 2

EP 0 340 539 B1

FIG. 3

EP 0 340 539 B1